# EUROPÄISCHE PATENTSCHRIFT

(11) **EP 1 815 904 B1**
(45) Veröffentlichungstag und Bekanntmachung des Hinweises auf die Patenterteilung: **28.04.2010**
(21) Anmeldenummer: 06101392.6
(22) Anmeldetag: 07.02.2006
(51) Int. Cl.: B01F 5/06, B29B 7/32

(54) **Mischelement für einen statischen Mischer, statischer Mischer sowie Verfahren zum Herstellen eines dergestalten Mischelements**
Mixing element for static mixer, static mixer and method of production of such a mixing element
Elément mélangeur pour mélangeur statique, mélangeur statique et procédé pour la fabrication d'un tel élément mélangeur

(43) Veröffentlichungstag der Anmeldung: 08.08.2007
(73) Patentinhaber: Stamixco AG, 8474 Dinhard (DE)
(72) Erfinder: Schneider, Gottlieb, 8472, Seuzach (CH)
(74) Vertreter: Graf, Werner

(56) Entgegenhaltungen:
- EP-B1- 0 727 249
- CH-A5- 693 560
- DE-A1- 2 262 016
- DE-A1- 3 618 062
- GB-A- 2 271 725
- US-A1- 2005 062 185
- BAKER J R: "MOTIONLESS MIXERS STIR UP NEW USES" CHEM ENG PROGRESS, AMERICAN INSTITUTE OF CHEM ENGINEERS, NEW YORK, NY, US, Bd. 87, Nr. 6, 1. Juni 1991 (1991-06-01), Seiten 32-38, XP000243533 ISSN: 0360-7275
- MICHEL O: "STATISCHE MISCHER IN DER KUNSTSTOFFTECHNIK" KUNSTSTOFFE, CARL HANSER VERL MUNCHEN, DE, Bd. 92, Nr. 7, Juli 2002 (2002-07), Seiten 80-81, XP001124004 ISSN: 0023-5563
- SCHMIDT A: "GUT GEMISCHT" KUNSTSTOFFE, CARL HANSER VERL MUNCHEN, DE, Bd. 94, Nr. 2, 2004, Seiten 44-46, XP001046714 ISSN: 0023-5563

## Beschreibung

Die Erfindung betrifft einen Mischereinsatz für einen statischen Mischer gemäss dem Oberbegriff von Anspruch 1. Die Erfindung betrifft weiter einen statischen Mischer gemäss dem Oberbegriff von Anspruch 14. Die Erfindung betrifft weiter ein Verfahren zum Herstellen eines Mischereinsatzes gemäss dem Oberbegriff von Anspruch 18.

Die Druckschrift EP 0727249 A1 offenbart einen statischen Mischer zum Mischen hochviskoser Medien. Der statische Mischer umfasst ein Rohr sowie einen innerhalb des Rohres angeordneten Mischereinsatz. Der Mischereinsatz wird auch als Mischelement bezeichnet. Nachteilig an diesem Mischer ist die Tatsache, dass die Herstellung des Mischereinsatzes sehr aufwändig und somit teuer ist. Nachteilig ist zudem die Tatsache, dass der Mischereinsatz an seiner Peripherie zur Rohrwand in Längsrichtung verlaufende Rippen aufweist, die zur Verstärkung des Mischers in axialer Richtung gegen die ebenfalls in axialer Richtung auftretenden Druckabfallkräfte dienen, entlang welchen ein zu mischendes Medium ungehemmt die Randregionen in welchem die Längsrippen verlaufen, in axialer Richtung durchströmen kann, was die Mischgüte des Mischers erheblich reduziert.

Die Druckschrift CH 693560 A5 offenbart einen Mischeinsatz sowie eine Mehrzahl von Mischeinsätzen, die in einem Rohr angeordnet sind und derart einen statischen Mischer ausbilden. Nachteilig an diesem Mischer ist die Tatsache, dass die Herstellung des Mischers aufwändig ist, dass der Mischer schlechte Mischeigenschaften aufweist, und dass die Mischeinsätze beim Mischen hochviskoser Medien verformt oder sogar zerstört werden.

Es ist Aufgabe der vorliegenden Erfindung einen wirtschaftlich vorteilhafteren Mischereinsatz, einen vorteilhafteren statischen Mischer sowie ein vorteilhafteres Verfahren zum Herstellen eines Mischereinsatzes vorzuschlagen.

Diese Aufgabe wird gelöst mit einem Mischereinsatz aufweisend die Merkmale von Anspruch 1. Die Unteransprüche 2 bis 13 betreffen weitere, vorteilhaft ausgestaltete Mischereinsätze. Die Aufgabe wird weiter gelöst mit einem statischen Mischer aufweisend die Merkmale von Anspruch 14 sowie mit einem Verfahren zum Herstellen eines Mischereinsatzes aufweisend die Merkmale von Anspruch 18.

Die Aufgabe wird insbesondere gelöst mit einem Mischereinsatz für einen statischen Mischer, wobei sich der Mischereinsatz in eine Längsrichtung erstreckt, und wobei der Mischereinsatz eine Mehrzahl von quer zur Längsrichtung verlaufende Stege sowie zumindest zwei in Längsrichtung verlaufende Längsstützen aufweist, und wobei der statische Mischereinsatz aus einer Mehrzahl von in Längsrichtung nebeneinander liegend angeordneten Grundelementen besteht, wobei jedes Grundelement midestens zwei Längsstützen umfasst, und wobei die Grundelemente und deren Längsstützen derart gegenseitig angeordnet sind, dass mindestens zwei über die gesamte Länge des Mischereinsatzes verlaufende Längsstützen ausgebildet sind, wobei nebeneinander liegend angeordnete Grundelemente zumindest über die Längsstützen fest miteinander verbunden sind.

Die Aufgabe wird vorzugsweise zudem gelöst mit einem Verfahren zum Herstellen eines Mischereinsatzes, wobei Grundelemente aus einem leicht schmelzbaren Material erzeugt werden, eine Mehrzahl von Grundelementen in einer Längsrichtung sich gegenseitig berührend nebeneinander angeordnet werden, danach die Grundelemente umhüllt werden, und danach die Grundelemente durch Ausschmelzen entfernt werden, sodass durch die nicht mehr vorhandenen Grundelemente Hohlräume ausgebildet werden, wobei danach den Hohlräumen derart flüssiges, sich anschliessend verfestigendes Material zugeführt wird, dass ein monolithischer Mischereinsatz entsteht, welcher im wesentlichen die durch die Grundelemente bestimmte Form aufweist.

Bevorzugt wird als flüssiges, sich anschliessend verfestigendes Material ein Metall, ein Giessharz oder ein Kunststoff, insbesondere ein Duroplast verwendet.

In einer bevorzugten Ausgestaltung sind die Längsstützen des Mischereinsatze innerhalb des Strömungsquerschnittes verlaufend angeordnet, und vorzugsweise bezüglich der Aussenkontur des Mischereinsatzes beabstandet.

Der erfindungsgemässe Mischereinsatz weist den Vorteil auf, dass dieser kostengünstig herstellbar ist. Insbesondere die Grundelemente sind kostengünstig und mit einfachen Werkzeugen herstellbar. Zudem kann der Mischereinsatz kostengünstig in einer Vielzahl unterschiedlicher Ausgestaltungen hergestellt werden. Der Mischereinsatz weist eine Mehrzahl in Längsrichtung verlaufender Längsstützen auf, was dem Mischereinsatz eine hohe Festigkeit verleiht. Da diese Längsstützen bevorzugt innerhalb, also entfernt von der Peripherie des Strömungsquerschnittes oder Rohrwand verlaufen und zudem für das Durchführen dieser Längsstützen keine Mischelementstege entfernt werden müssen, kann kein Material ungehindert innerhalb der Mischerkonstruktion und auch nicht der Rohrwand entlang strömen und so das Mischergebnis negativ beeinflussen. Diese Längsstützen zusammen mit einer geeigneten Werkstoffwahl erlauben die Dicke der Mischelementstege bei hoher Festigkeit auf ein Minimum zu reduzieren, das Leervolumen der Mischelemente zu maximieren und dadurch den Strömungswiderstand zu minimieren. Der Mischereinsatz wird daher auch bei hohen Druckabfällen nicht deformiert. Die nebeneinander liegenden Grundelemente sind in einer vorteilhaften Ausgestaltung zumindest über die aneinander liegenden Längsstützen fest miteinander verbunden, beispielsweise durch Kleben, Löten oder Schweissen. In einer weiteren vorteilhaften Ausgestaltung ist der Mischereinsatz als monolithisches Bauteil ausgestaltet und weist daher eine hohe Festigkeit auf, insbesondere in Längsrichtung. Unter "monolithischem Bauteil" wird ein Bauteil verstanden, das keine Schwächungen durch Fügestellen - beispielsweise Lötverbindungen aufweist. Das monolithische Bauteil besteht vorzugsweise aus einer metallischen Gusslegierung mit hohen Festigkeitswerten oder einem Kunststoff wie einem Thermoplast oder einem Duroplast, oder einer Keramik, und ist aus einem einzigen Stück ausgebildet.

Sofern der monolithische Mischereinsatz aus Metall besteht, so ist dieser in der Regel ein Feingussteil, welches vorzugsweise unter Verwendung eines Wachsausschmelzverfahrens gegossen wird. Die durch das Wachsausschmelzverfahren hergestellte Hohlform weist die in Längsrichtung verlaufenden Längsstützen auf, welche derart mit den quer verlaufenden Stegen verbunden sind, dass die eingeführte Schmelze allen Hohlräumen der Hohlform zuverlässig zugeführt wird. Der Mischereinsatz kann aber beispielsweise auch mittels eines Metallpulverspritzguss-Verfahrens hergestellt werden. Bei diesem Verfahren wird aus einem Gemisch von Metallpulver und organischen Stoffen ein Grünteil mittels Spritzgusses hergestellt. Anschliessend werden die organischen Stoffe weitgehend thermisch entfernt und das Grünteil, in der die metallischen Komponenten weiterhin aneinander haften, zu einer Endform dichtgesintert. Der Mischereinsatz könnte jedoch auch als Keramikteil hergestellt werden. Für den Einsatz in chemischen Reaktoren können die Teile noch mit katalytisch wirksamen Schichten überzogen werden oder Keramikmassen können mit katalytisch wirkenden Bestandteilen dotiert werden.

In einer bevorzugten Ausgestaltung wird der Mischereinsatz in einem Behälter mit vorstehenden Auflagen angeordnet, wobei die Längsstützen des Mischereinsatzes auf den Auflagen des Behälters aufliegen, sodass die auf den Mischereinsatz wirkenden Kräfte an definierten Stellen auf den Behälter übertragen werden. Diese Anordnung vermindert ebenfalls die Gefahr, dass der Mischereinsatz deformiert werden könnte. Diese Anordnung weist zudem den Vorteil auf, dass alle Verbindungsstellen immer eine gleiche, strömungsmässig günstige Form aufweisen, da die Ausgangsteile beispielsweise aus einem leicht schmelzbaren Material wie Wachs mittels eines Werkzeuges gegossen werden, der Mischereinsatz auf einfache Weise aus dem Behälter entfernt, seine offene Struktur einfacher und rascher gereinigt und beispielsweise gut kontrolliert oder sogar ersetzt werden kann.

Der erfindungsgemässe Mischereinsatz weist zudem den Vorteil auf, dass dieser keine wesentlichen Strömungshindernisse wie grosse, unförmige Schweissstellen aufweist, an welchen insbesondere viskose Fluide beim Durchströmen hängen bleiben könnten. Dadurch ist es ausgeschlossen, dass Fluide lange am selben Ort verweilen und sich, zum Beispiel bei temperaturempfindlichen Polymeren, sogar zersetzen könnten.

Die Erfindung wird nachfolgend anhand von Ausführungsbeispielen näher erläutert. Die Figuren zeigen:
- Fig. 1: eine perspektivische Ansicht eines Grundelementes;
- Fig. 2: eine perspektivische Ansicht der gegenüberliegenden Seite des Grundelementes gemäss Figur 1;
- Fig. 3: eine Seitenansicht des Grundelementes gemäss Figur 1;
- Fig. 4: eine Draufsicht des Grundelementes gemäss Figur 2;
- Fig. 5: eine perspektivische Ansicht zweier aneinander anliegender Grundelemente;
- Fig. 6: ein monolithischer Mischereinsatz umfassend vier Grundelemente;
- Fig. 7: ein Mischereinsatz umfassend vier verbundene Grundelemente;
- Fig. 8: einen Längsschnitt durch einen statischen Mischer;
- Fig. 9: eine Seitenansicht des Mischers gemäss Figur 8 aus Blickrichtung A bzw. B.
- Fig. 10: eine weitere Seitenansicht eines Mischers aus Blickrichtung A.

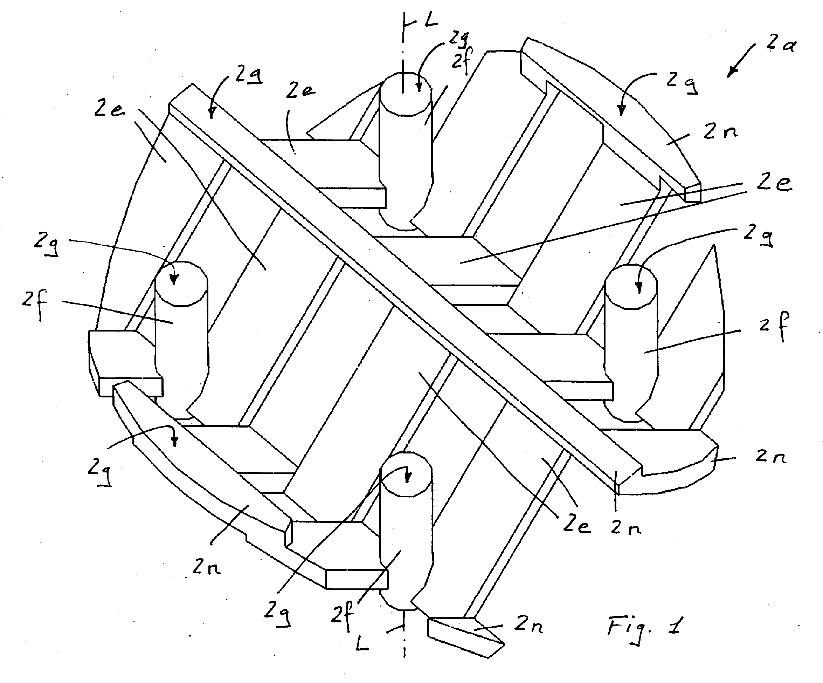

Figur 1 zeigt ein Grundelement 2a mit vier in Längsrichtung L verlaufenden, zylinderförmigen Längsstützen 2f, wobei jede Längsstütze 2f an deren beiden Endabschnitten je eine senkrecht zur Längsrichtung L verlaufende Auflagefläche 2g aufweist, welche zu einem nebeneinander liegend angeordneten Grundelement 2a auch eine Berührungsstelle 2g aufbildet. Alle Längsstützen 2f sind gleich lang. Das Grundelement 2a weist eine Mehrzahl von quer zur Längsrichtung L verlaufenden Stegen 2e auf.

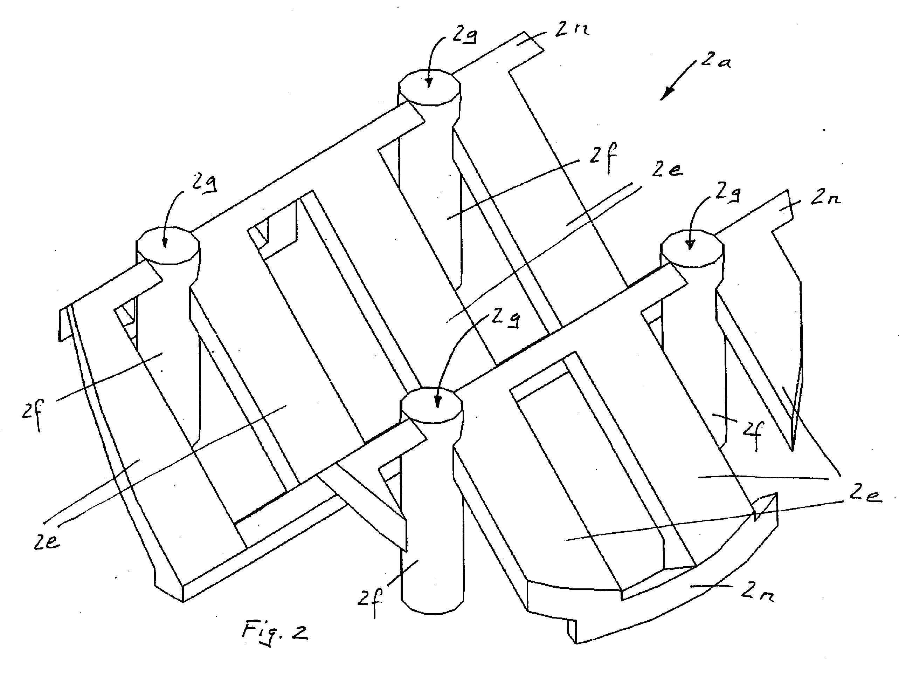

Figur 2 zeigt die gegenüberliegende Seite des in Figur 1 dargestellten Grundelementes 2a. Dieselben Bezugzeichen stellen dieselben Elemente dar.

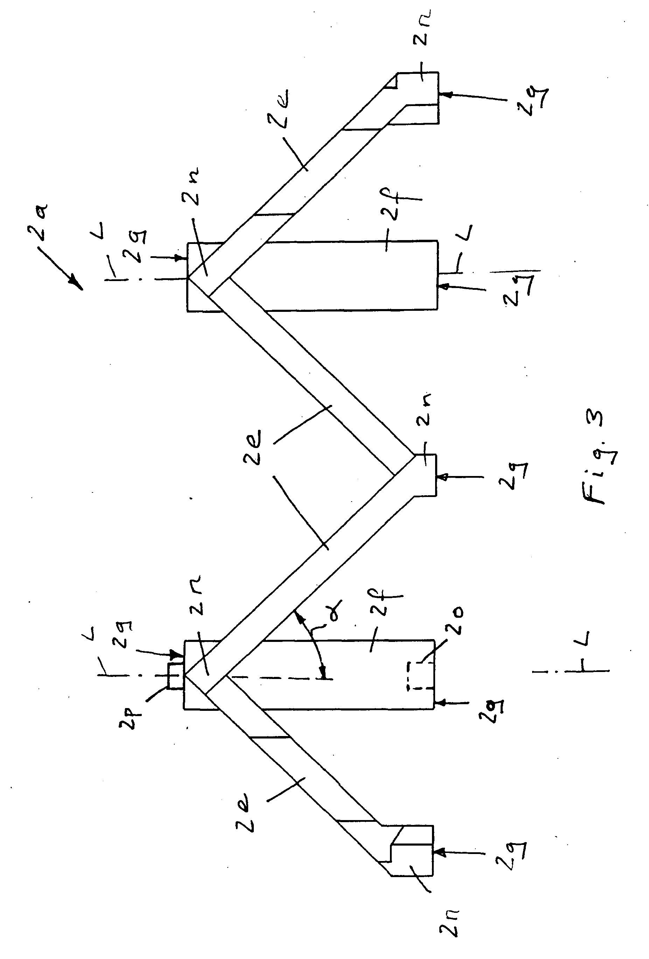

Figur 3 zeigt das in Figur 2 dargestellte Grundelement 2a in einer Seitenansicht. Die Stege 2e verlaufen bezüglich der Längsrichtung L unter einem Winkel α von weniger als 90 Grad, das heisst quer zur Längsrichtung L, vorzugsweise unter einem Winkel α im Bereich zwischen 10 Grad und 80 Grad. Das Grundelement 2a weist fünf Verbindungsstege 2n auf, welche senkrecht zur Längsrichtung L verlaufen, und in welche Stege 2e münden, und durch welche die Stege 2e (mit Ausnahme der äussersten, kurzen Randstege, die nur einseitig gehalten sind) gegenseitig gehalten werden. In einer vorteilhaften Ausgestaltung können, wie in Figur 1 und 3 dargestellt, auch die Verbindungsstege 2n Auflageflächen 2g ausbilden. Aus der in Figur 3 gewählten Ansicht ist ersichtlich, dass im dargestellten Ausführungsbeispiel die unten angeordneten Verbindungsstege 2n Auflageflächen 2g ausbilden, wogegen die oben angeordneten Verbindungsstege 2n keine Auflageflächen 2g ausbilden. Vorzugsweise verlaufen die Auflageflächen 2g der Verbindungsstege 2n sowie die Auflageflächen 2g der Längsstützen 2f, wie in Figur 3 dargestellt, in einer gemeinsamen Ebene. Diese Anordnung weist den Vorteil auf, dass die Grundelemente 2a einfach übereinander beziehungsweise nebeneinander angeordnet werden können. Die Längsstütze 2f könnte, wie in Figur 3 links angedeutet, zudem noch mit Verbindungsstellen 2p, 2o versehen sein. Gleiche Verbindungsstellen 2p, 2o oder in ähnlicher Ausführung können auch in den Verbindungsstegen 2n vorhanden sein.

Die Längsstützen 2f sind vorzugsweise, wie dargestellt, direkt mit dem Verbindungssteg 2n verbunden. Die Längsstützen 2f könnten jedoch auch nur mit den Stegen 2e verbunden sein. Das dargestellte Grundelement 2a weist vier Längsstützen 2f auf, welche quadratisch beabstandet angeordnet sind. Das Grundelement 2a sollte zumindest zwei Längsstützen 2f aufweisen, und kann somit beispielsweise auch drei, fünf oder noch mehr Längsstützen 2f aufweisen.

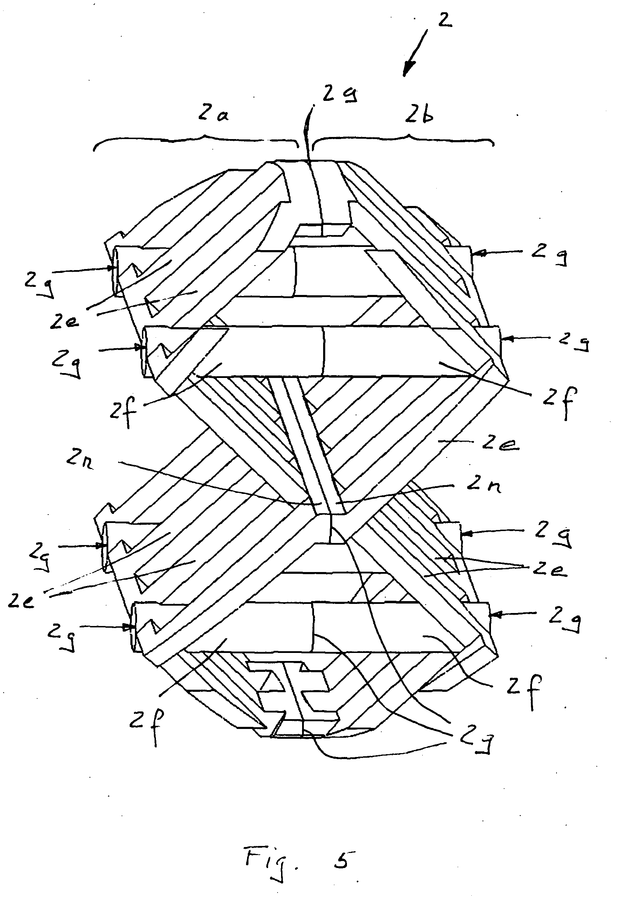

Die Auflageflächen 2g der Längsstützen 2f und/oder die Auflageflächen 2g der Verbindungsstege 2n sind vorzugsweise derart angeordnet, dass, wie in den Figuren 5, 6 und 7 dargestellt, eine Mehrzahl von Grundelementen 2a,2b,2c,2d in Längsrichtung L nebeneinander liegend angeordnet werden können, wobei die Grundelemente 2a,2b,2c,2d sich über die Auflageflächen 2g gegenseitig berühren. Falls der Mischereinsatz 2 als metallisches, monolithisches Bauteil oder aus aushärtendem Giessharz wie einem Duroplast hergestellt wird, dienen die Längsstützen 2f als Zuführkanäle für das flüssige Metall oder das Giessharz, und die Auflageflächen 2g bilden Durchtrittsöffnungen für das flüssige Metall. Die Längsstützen 2f, die Stege 2e und die Auflageflächen 2g werden dabei derart angeordnet, dass alle Hohlräume mit dem flüssigen Metall gefüllt werden. In einer vorteilhaften Ausführungsform weisen alle Grundelemente 2a,2b,2c,2d dieselbe Form auf. In Figur 5 sind die beiden in Längsrichtung L nebeneinander angeordneten Grundelemente 2a,2b bezüglich einer senkrecht zur Längsrichtung L verlaufenden Ebene gegenseitig symmetrisch angeordnet, sodass sich die Grundelemente 2a, 2b sowohl an den Auflageflächen 2g der Längsstützen 2f als auch an den Auflageflächen 2g der Verbindungsstege 2n gegenseitig berühren. Die Grundelemente 2a, 2b könnten, je nach anstehender Mischaufgabe, jedoch auch in einer Mehrzahl anderer gegenseitiger Ausrichtungen und Anzahl Stegen 2e nebeneinander angeordnet sein, derart, dass zumindest die Auflageflächen 2g von jeweils in Längsrichtung L benachbarten Längsstützen 2f aufeinander zu liegen kommen. Es können eine Vielzahl von Grundelementen 2a,2b,2c,2d in Längsrichtung L nebeneinander liegend und sich jeweils gegenseitig berührend angeordnet werden. Zudem kann jedes Grundelement 2a,2b,2c,2d in einer Mehrzahl möglicher Lagen angeordnet werden. Je nach Erfordernis kann der Mischereinsatz 2 daher, durch ein entsprechendes gegenseitiges Anordnen der Grundelemente 2a,2b,2c,2d in einer Vielzahl von Ausführungsformen ausgestaltet werden.

Die Grundelemente 2a,2b,2c,2d werden beispielsweise aus Wachs hergestellt. Die einfache geometrische Form der Grundelemente 2a,2b,2c,2d ermöglicht es, diese beispielsweise mit einem einfachen, zweiteiligen Werkzeug kostengünstig herzustellen.

Der Mischereinsatz 2 wird vorzugsweise mit einem Wachsausschmelzverfahren, auch als Präzisionsgussverfahren (Englisch: "Investment Casting") bezeichnet hergestellt. Dazu werden die Grundelemente 2a,2b,2c,2d vorerst aus einem leicht schmelzbaren Material wie Wachs hergestellt. Demnach werden eine Mehrzahl von Grundelementen 2a,2b,2c,2d in einer Längsrichtung L sich gegenseitig berührend nebeneinander angeordnet. Die Grundelemente 2a,2b,2c,2d werden danach mit Material umhüllt. Danach erfolgt ein Erwärmungsschritt während welchem die Grundelemente 2a,2b,2c,2d durch Ausschmelzen entfernt werden, sodass durch die nicht mehr vorhandenen Grundelemente 2a,2b,2c,2d Hohlräume ausgebildet werden. Diese Hohlräume werden mit einem Material, insbesondere Keramik, einem duroplastischen Giessharz oder einem flüssigen Metall gefüllt, sodass ein monolithischer, vorzugsweise metallischer Mischereinsatz 2 entsteht, welcher im wesentlichen die durch die Grundelemente 2a,2b,2c,2d bestimmte Form aufweist.

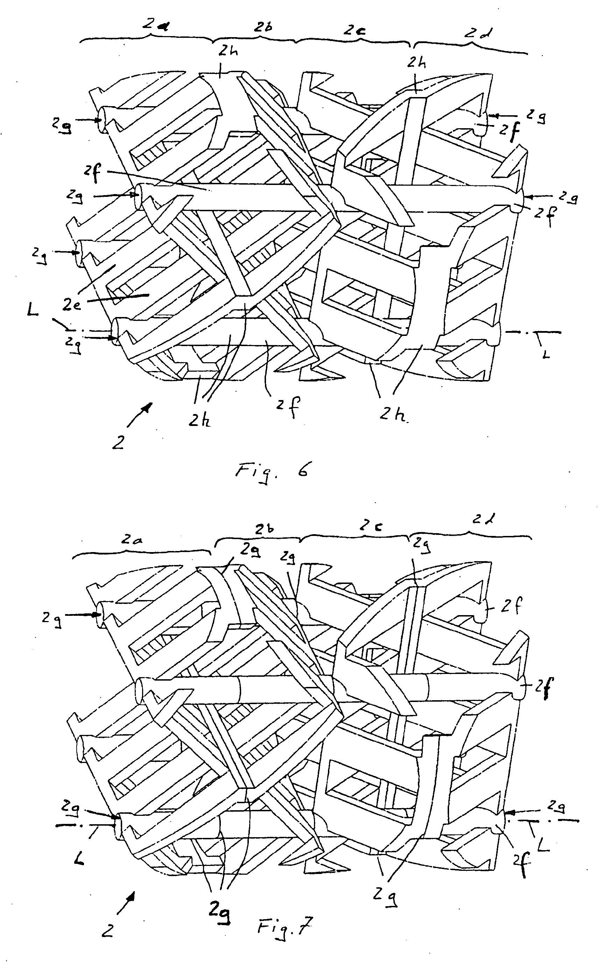

Figur 6 zeigt einen derart hergestellten Mischereinsatz 2, dessen Form durch vier Grundelemente 2a,2b,2c2d bestimmt ist. Die vier ursprünglich aus Wachs bestehenden Grundelemente 2a,2b,2c,2d bilden nun gemeinsam ein einziges, monolithisches metallisches Bauteil. An den ehemaligen Auflageflächen 2g haben sich während dem Giessen Verbundstellen 2h ausgebildet, weshalb die Grundelemente 2a,2b,2c,2d nun über diese gegenseitigen Verbundstellen 2h fest miteinander verbunden sind. Die Grundelemente 2a,2b,2c,2d sind vorzugsweise derart ausgestaltet und derart angeordnet, dass sich, wie in Figur 6 dargestellt, Längsstützen 2f ausbilden, welche sich über die gesamte Länge des Mischereinsatzes 2 erstrecken.

Die Grundelemente 2a,2b,2c,2d können gegenseitig auf unterschiedlichste Weise angeordnet werden, und wie in Figur 6 dargestellt auch derart in Längsrichtung L nebeneinander angeordnet sein, dass die Grundelemente 2a,2b bzw. 2c,2d bezüglich der Längsrichtung L gleich ausgerichtet oder gegenseitig um ein ganzzahliges Vielfach von 90 Grad verdreht angeordnet sind.

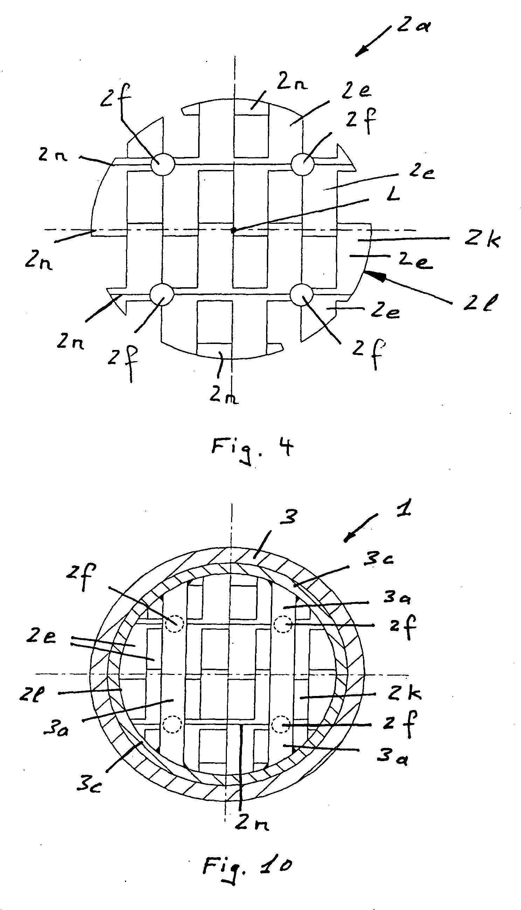

Figur 4 zeigt eine Draufsicht des Grundelementes 2a gemäss Figur 2. Das Grundelement 2a, beziehungsweise der gesamte Mischereinsatz 2 umfassend eine Mehrzahl von in Längsrichtung L nebeneinander angeordneten Grundelementen 2a,2b,2c,2d, weist eine Querschnittfläche 2k und vorzugsweise eine kreisförmig verlaufende Aussenkontur 21 auf. In einer bevorzugten Ausgestaltung verlaufen die Längsstützen 2f innerhalb der Querschnittfläche 2k und beabstandet zur Aussenkontur 21. Die Längsstützen 2f könnten jedoch auch derart angeordnet sein, dass diese, aus der Sicht gemäss Figur 4, Teil der Aussenkontur 21 bilden. Da der Mischereinsatz 2 vorzugsweise als monolithisches, metallisches Bauteil ausgestaltet ist, kann die Aussenkontur 21 einfach nachbearbeitet werden, falls diese nach dem Giessen des Mischereinsatzes 2 nicht den gewünschten Erfordernissen entspricht beziehungsweise nicht die gewünschte Aussenkontur 21 aufweist. Somit ist es beispielsweise sehr einfach und kostengünstig möglich einen Mischereinsatz 2 durch nachträgliches Bearbeiten mit einer kreisförmigen beziehungsweise zylinderförmigen Aussenkontur 21 zu versehen.

Der Mischereinsatz 2 wird vorzugsweise in einen rohrförmigen Behälter 3 eingeführt. Der Behälter 3 könnte jedoch auch eine andere Querschnittsform aufweisen, z.B. rechteckig oder quadratisch. Die Aussenkontur 21 des Mischereinsatzes 2 wird daher vorzugsweise derart nachgearbeitet, dass sich zwischen dem Mischereinsatz 2 und der Behälterwand 3 ein Spalt geringer Breite ergibt. Dadurch kann die Längsströmung, welche dem Mischen nicht unterliegt, erheblich reduziert werden. Der Mischereinsatz 2 kann derart nachbearbeitet werden, dass die Aussenkontur 21 einen vorgebbare Spaltbreite, insbesondere auch einen sehr geringen Spalt zur Innenwand des Behälters 3 aufweist.

Figur 7 zeigt einen Mischereinsatz 2 bestehend aus vier miteinander an deren Berührungsstellen 2g fest verbunden Grundelementen 2a,2b,2c,2d. Die Grundelemente 2a,2b,2c,2d bestehen aus einem festen Material, beispielsweise aus Metall, Kunststoff (Thermoplast, Duroplast) oder Keramik. Die Grundelemente 2a,2b,2c,2d sind beispielsweise durch Kleben, Löten oder Schweissen über deren gemeinsamen Berührungsstellen 2g fest miteinander verbunden. Es kann sich als vorteilhaft erweisen die Längsstützen 2f, wie in Figur 3 links dargestellt, mit Verbindungsstellen wie Vorsprüngen 2p und Vertiefungen 2o zu versehen. Diese Verbindungsstellen ermöglichen Grundelemente 2a,2b,2c,2d in genau definierter Lage nebeneinander anzuordnen.

In einer weiteren vorteilhaften Ausgestaltung könnte die Längsstütze 2f auch als Hohlzylinder ausgestaltet sein, innerhalb welchem eine Spannvorrichtung wie eine Spannschraube derart angeordnet ist, dass diese, beispielsweise im Mischereinsatz 2 gemäss Figur 7, an den nach aussen gewandten Auflageflächen 2g der Grundelemente 2a und 2d aufliegt, und dadurch eine Presskraft auf alle Grundelemente 2a,2b,2c,2d bewirkt, und diese derart zusammenhält. Die Enden 2g der Längsstützen 2f sind bei einem Mischer beim Eintrittselement jeweils auf der Anströmseite und beim Austrittselement jeweils auf der Abströmseite durch Bearbeiten oder bereits als Gussteil so geformt, dass strömungsmässig keine Störungen oder Totzonen auftreten können.

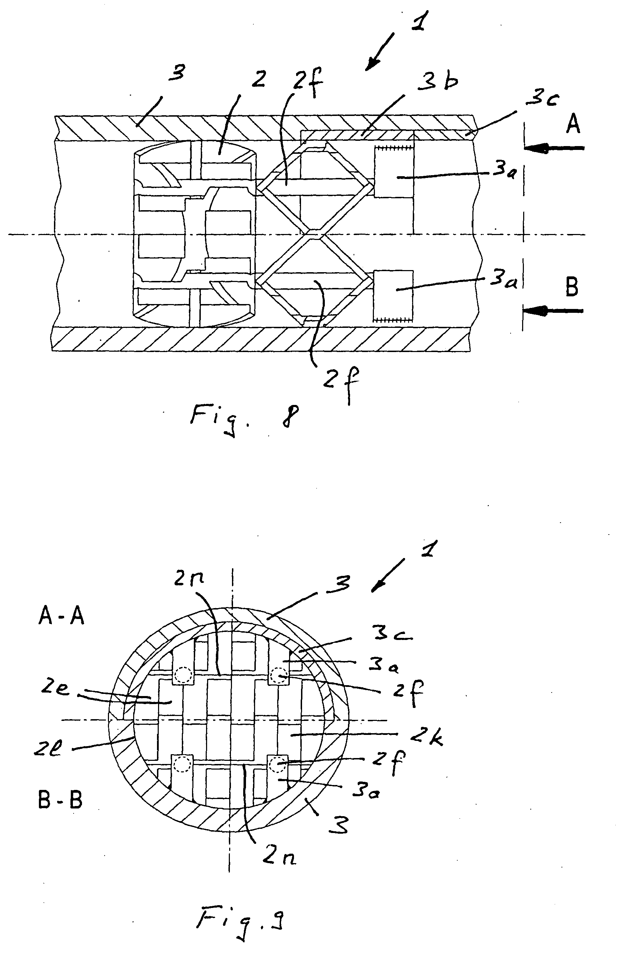

Figur 8 zeigt in einem Längsschnitt eine statische Mischvorrichtung 1 umfassend einen rohrförmigen Behälter 3, in welchem der in Figur 6 oder 7 dargestellte Mischereinsatz 2 angeordnet ist. Vorzugsweise weist der Druckbehälter 3 an dessen Innenseite in den Innenraum vorstehende Auflagen 3a auf, an welchen der Mischereinsatz 2 anliegt. Die vorstehenden Auflagen 3a weisen eine strömungsgünstige Form auf, damit kein durchfliessendes Material daran hängen bleiben kann. Figur 8 zeigt zwei Ausführungsformen von Verbindungen der Auflagen 3a mit dem Druckbehälter 3. Die oben, mit A bezeichnete Ausführungsform umfasst eine in den Druckbehälter 3 einschiebbare Hülse 3b, wobei die Auflage 3a fest mit der Hülse 3b verbunden ist. Eine weitere, nur teilweise dargestellte Hülse 3c, ist lösbar mit dem Behälter 3 verbunden, und dient zum Fixieren und Lösen der Hülse 3b. Bei der unten, mit B bezeichneten Ausführungsform ist die Auflage 3a fest mit dem Druckbehälter 3 verbunden. Die Auflagen 3a sind vorzugsweise, wie in Figur 8 und 9 dargestellt, derart angeordnet, dass die Längsstützen 2f an den Auflagen 3a anliegen. Die Längsstützen 2f dienen somit einerseits zur Kraftübertragung in Längsrichtung L innerhalb des Mischereinsatzes 2, und andererseits zur Übertragung der am Mischereinsatz 2 angreifenden Kräfte auf den Behälter 3. Diese Anordnung weist den Vorteil auf, dass der Mischereinsatz 2 aus dem Behälter 3 entfernt werden kann, und somit beispielsweise kontrolliert oder ausgetauscht werden kann. Der erfindungsgemässe Mischereinsatz 2 weist den weiteren Vorteil auf, dass dieser eine selbst tragende Struktur bildet, welche auch grosse, in Längsrichtung L wirkende Kräfte aufnehmen kann. Der erfindungsgemässe Mischereinsatz 2 ist somit sehr robust, und insbesondere auch zum Mischen von zähflüssigen Medien geeignet. Die Anordnung gemäss Figur 8 weist zudem den Vorteil auf, dass die Längskraft im wesentlichen über die Auflagen 3a dem Druckbehälter 3 zugeleitet werden, was zur Folge hat, dass der Druckbehälter 3 nur an dieser Stelle derart auszugestalten ist, dass die Längskräfte aufgenommen werden können. An den übrigen Stellen ist der Druckbehälter 3 vorzugsweise nur geringen Längskräften ausgesetzt.

Figur 9 zeigt eine Seitenansicht der in Figur 8 dargestellten Mischvorrichtung 1 aus Blickrichtung A bzw. B. In der oberen Hälfte ist die in den Behälter 3 einschiebbare Hülse 3c ersichtlicht, wobei die Auflage 3a, wie in Figur 8 dargestellt, durch die Hülse 3b gehalten ist. In der unteren Hälfte ist ersichtlich, dass die Auflage 3a fest mit der Wand des Behälters 3 verbunden ist. Der Mischereinsatz 2 kann, insbesondere mit der oben dargestellten Ausführungsform, auf einfache Weise aus dem Behälter 3 entfernt und wieder eingesetzt werden. In einer bevorzugten Ausgestaltung weist der Mischereinsatz 2 sowie der Innendurchmesser des Behälters 3 eine kreisförmige Form auf. Diese könnten jedoch beispielsweise auch rechteckig oder quadratisch ausgestaltet sein.
Figur 10 zeigt in einer Seitenansicht aus Blickrichtung B ein weiteres Ausführungsbeispiel einer Mischvorrichtung 1, welche, im Unterschied zu der in Figur 9 dargestellten Ausführungsform, eine Auflage 3a aufweist, welche durchgehend verlaufend ausgestaltet ist, das heisst, welche beidseitig mit der einschiebbaren Hülse 3c verbunden ist. Diese durchgehend verlaufende Auflage 3a könnte auch fest mit dem Behälter 3 verbunden sein.

## Patentansprüche

1. Mischereinsatz (2) für einen statischen Mischer (1), wobei sich der Mischereinsatz (2) in eine Längsrichtung (L) erstreckt, und wobei der statische Mischereinsatz (2) aus einer Mehrzahl von in Längsrichtung (L) nebeneinander liegend angeordneten Grundelementen (2a,2b,2c,2d) besteht, und wobei der Mischereinsatz (2) eine Mehrzahl von quer zur Längsrichtung (L) verlaufende Stege (2e) aufweist, **dadurch gekennzeichnet, dass** der Mischereinsatz (2) zumindest zwei in Längsrichtung (L) verlaufende Längsstützen (2f) aufweist, wobei jedes Grundelement (2a,2b,2c,2d) mindestens zwei Längsstützen (2f) umfasst, und wobei die Grundelemente (2a,2b,2c,2d) und deren Längsstützen (2f) derart gegenseitig angeordnet sind, dass mindestens zwei über die gesamte Länge des Mischereinsatzes (2) verlaufende Längsstützen (2f) ausgebildet sind, wobei nebeneinander liegend angeordnete Grundelemente (2a,2b,2c,2d) zumindest über die Längsstützen (2f) fest miteinander verbunden sind.

2. Mischereinsatz (2) nach Anspruch 1, wobei dieser eine senkrecht zur Längsrichtung (L) verlaufende Querschnittsfläche (2k) mit einer Aussenkontur (21) aufweist, und wobei die Längsstützen (2f) innerhalb der Querschnittfläche (2k) und beabstandet zur Aussenkontur (21) verlaufen.

3. Mischereinsatz (2) nach einem der vorhergehenden Ansprüche, wobei der Mischereinsatz (2) als monolithisches Bauteil ausgestaltet ist.

4. Mischereinsatz (2) nach Anspruch 3, **dadurch gekennzeichnet, dass** der Mischereinsatz (2) aus Metall besteht.

5. Mischereinsatz (2) nach einem der Ansprüche 1 oder 2, wobei die Grundelemente (2a,2b,2c,2d) zumindest an den Längsstützen (2f) gegenseitige Berührungsstellen (2g) aufweisen, über welche nebeneinander liegend angeordnete Grundelemente (2a,2b,2c,2d) fest miteinander verbunden sind, insbesondere durch Kleben, Löten oder Schweissen.

6. Mischereinsatz (2) nach einem der vorhergehenden Ansprüche, wobei jedes Grundelement (2a,2b,2c,2d) dieselbe Form aufweist.

7. Mischereinsatz (2) nach einem der vorhergehenden Ansprüche, wobei in Längsrichtung (L) nebeneinander liegend angeordnete Grundelemente (2a,2b,2c,2d) bezüglich einer senkrecht zur Längsrichtung (L) verlaufenden Ebene gegenseitig symmetrisch angeordnet sind.

8. Mischereinsatz (2) nach einem der vorhergehenden Ansprüche, wobei in Längsrichtung (L) nebeneinander liegend angeordnete Grundelemente (2a,2b,2c,2d) bezüglich der Längsrichtung (L) gleich ausgerichtet oder gegenseitig um ein ganzzahliges Vielfaches von 90 Grad verdreht angeordnet sind.

9. Mischereinsatz (2) nach einem der vorhergehenden Ansprüche, **dadurch gekennzeichnet, dass** dieser eine kreisförmige Aussenkontur (21) aufweist.

10. Mischereinsatz (2) nach einem der vorhergehenden Ansprüche, wobei die Grundelemente (2a,2b,2c,2d) senkrecht zur Längsrichtung (L) verlaufende Verbindungsstege (2n) aufweisen, über welche die Mehrzahl der Stege (2e) gegenseitig fest verbunden sind.

11. Mischereinsatz (2) nach Anspruch 10, wobei die Verbindungsstege(2n) gegenseitige Berührungsstellen (2g) aufweisen, über welche nebeneinander liegend angeordnete Grundelemente (2a,2b,2c,2d) fest miteinander verbunden sind.

12. Mischereinsatz (2) nach einem der vorhergehenden Ansprüche, aufweisend vier in Längsrichtung (L) verlaufende Längsstützen (2f).

13. Michereinsatz (2) nach einem der vorhergehenden Ansprüche, aufweisend zumindest ein Grundelement (2a,2b,2c,2d) mit einer katalytisch wirkenden Substanz.

14. Statischer Mischer (1) umfassend einen Behälter (3) sowie einen innerhalb des Behälters (3) angeordneten Mischereinsatz (2) nach einem der vorhergehenden Ansprüche.

15. Statischer Mischer (1) nach Anspruch 14, wobei der Behälter (3) an dessen Innenseite in den Innenraum vorstehende Auflagen (3a) aufweist, an welchen der Mischereinsatz (2) anliegt.

16. Statischer Mischer (1) nach Anspruch 14 oder 15, wobei der Behälter (3) derart ausgestaltete und angeordnete Auflagen (3a) aufweist, dass die Längsstützen (2f) auf die Auflagen (3a) zu liegen kommen.

17. Statischer Mischer (1) nach einem der Ansprüche 15 bis 16, wobei die Auflagen (3a) an einem beweglichen Teil (3b) angeordnet sind, welches fest mit dem Behälter (3) verbindbar ist.

18. Verfahren zum Herstellen eines Mischereinsatzes (2) nach Anspruch 3, **dadurch gekennzeichnet, dass** Grundelemente (2a,2b,2c,2d) aus einem leicht schmelzbaren Material erzeugt werden, dass eine Mehrzahl von Grundelementen (2a,2b,2c,2d) in einer Längsrichtung (L) sich gegenseitig berührend nebeneinander liegend angeordnet werden, dass die Grundelemente (2a,2b,2c,2d) umhüllt werden, dass danach die Grundelemente (2a,2b,2c,2d) durch Ausschmelzen entfernt werden, sodass durch die nicht mehr vorhandenen Grundelemente (2a,2b,2c,2d) Hohlräume ausgebildet werden, und dass den Hohlräumen flüssiges, sich anschliessend verfestigendes Material zugeführt wird, so dass ein monolithischer Mischereinsatz (2) entsteht, welcher im wesentlichen die durch die Grundelemente (2a,2b,2c,2d) bestimmte Form aufweist.

19. Verfahren nach Anspruch 18, **dadurch gekennzeichnet, dass** alle Grundelemente (2a,2b,2c,2d) dieselbe Form aufweisen und in Längsrichtung (L) derart nebeneinander liegend angeordnet werden, dass in Längsrichtung (L) benachbarte Grundelemente (2a,2b,2c,2d) unterschiedlich ausgerichtet sind.

## Claims

1. A mixer insert (2) for a static mixer (1), wherein the mixer insert (2) extends in a longitudinal direction (L), and wherein the static mixer insert (2) is made up of a plurality of base elements (2a, 2b, 2c, 2d) arranged lying adjacent to one another in the longitudinal direction (L), and wherein the mixer insert (2) has a plurality of bars (2e) which extend transversely to the longitudinal direction (L), **characterised in that** the mixer insert (2) has at least two longitudinal supports (2f) extending in the longitudinal direction (L), with each base element (2a, 2b, 2c, 2d) including at least two longitudinal supports (2f), and with the base elements (2a, 2b, 2c, 2d) and their longitudinal supports (2f) being mutually arranged such that at least two longitudinal supports (2f) extending over the total length of the mixed insert (2) are formed, with base elements (2a, 2b, 2c, 2d) arranged lying adjacent to one another being fixedly connected to one another via at least the longitudinal supports (2f).

2. A mixer insert (2) in accordance with claim 1, wherein it has a cross-sectional surface (2k) extending perpendicular to the longitudinal direction (L) and having an outer contour (21); and wherein the longitudinal supports (2f) extend within the cross-sectional surface (2k) and spaced apart from the outer contour (21).

3. A mixer insert (2) in accordance with any one of the preceding claims, wherein the mixer insert (2) is designed as a monolithic component.

4. A mixer insert (2) in accordance with claim 3, **characterised in that** the mixer insert (2) is made of metal.

5. A mixer insert (2) in accordance with one of the claims 1 or 2, wherein the base elements (2a, 2b, 2c, 2d) have mutual contact points (2g) at at least the longitudinal supports (2f) via which contact points base elements (2a, 2b, 2c, 2d) arranged lying adjacent to one another are fixedly connected to one another, in particular by adhesive bonding, soldering or welding.

6. A mixer insert (2) in accordance with any one of the preceding claims, wherein each base element (2a, 2b, 2c, 2d) has the same shape.

7. A mixer insert (2) in accordance with any one of the preceding claims, wherein base elements (2a, 2b, 2c, 2d) arranged lying adjacent to one another in the longitudinal direction (L) are arranged mutually symmetrically with respect to a plane extending perpendicular to the longitudinal direction (L).

8. A mixer insert (2) in accordance with any one of the preceding claims, wherein base elements (2a, 2b, 2c, 2d) arranged lying adjacent to one another are arranged aligned equally with respect to the longitudinal direction (L) or mutually rotated by a whole number multiple of 90 degrees.

9. A mixer insert (2) in accordance with any one of the preceding claims, **characterised in that** it has a circular outer contour (21).

10. A mixer insert (2) in accordance with any one of the preceding claims, wherein the base elements (2a, 2b, 2c, 2d) have connection bars (2n) which extend perpendicular to the longitudinal direction (L) and via which the plurality of bars (2e) are mutually fixedly connected.

11. A mixer insert (2) in accordance with claim 10, wherein the connection bars (2n) have mutual contacting points (2g) via which base elements (2a, 2b, 2c, 2d) arranged lying adjacent to one another are fixedly connected to one another.

12. A mixer insert (2) in accordance with any one of the preceding claims, having four longitudinal supports (2f) extending in the longitudinal, direction (L).

13. A mixer insert (2) in accordance with any one of the preceding claims, having at least one base element (2a, 2b, 2c, 2d) with a catalytically active substance.

14. A static mixer (1) including a container (3) as well as a mixer insert (2) in accordance with any one of the preceding claims arranged within the container (3).

15. A static mixer (1) in accordance with claim 14, wherein the container (3) has contact surfaces (3a) which project at its inner side into the inner space and which the mixer insert (2) contacts.

16. A static mixer (1) in accordance with claim 14 or claim 15, wherein the container (3) has contact surfaces (3a) designed and arranged such that the longitudinal supports (2f) come to lie on the contact surfaces (3a).

17. A static mixer (1) in accordance with one of the claims 15 to 16, wherein the contact surfaces (3a) are arranged at a movable part (3b) which can be fixedly connected to the container (3).

18. A method for the manufacture of a mixer insert (2) in accordance with claim (3), **characterised in that** base elements (2a, 2b, 2c, 2d) are produced from a material which can be melted easily; **in that** a plurality of base elements (2a, 2b, 2c, 2d) are arranged mutually contacting and lying adjacent to one another in a longitudinal direction (L); **in that** the base elements (2a, 2b, 2c, 2d) are encased; **in that** the base elements (2a, 2b, 2c, 2d) are afterwards removed by melting off so that hollow spaces are formed by the base elements (2a, 2b, 2c, 2d) no longer present; and **in that** liquid material which subsequently solidifies is supplied to the hollow spaces so that a monolithic mixer insert (2) arises which substantially has the shape determined by the base elements (2a 2b, 2c, 2d).

19. A method in accordance with claim 18, **characterised in that** all the base elements (2a, 2b, 2c, 2d) have the same shape and are arranged lying adjacent to one another in the longitudinal direction (L) such that base elements (2a, 2b, 2c, 2d) adjacent in the longitudinal direction (L) are aligned differently.

## Revendications

1. Insert mélangeur (2) pour un mélangeur statique (1), sachant que l'insert mélangeur (2) s'étend dans une direction longitudinale (L), sachant que l'insert mélangeur statique (2) est constitué d'une pluralité d'éléments de base (2a, 2b, 2c, 2d) disposés en juxtaposition dans la direction longitudinale (L), et sachant que l'insert mélangeur (2) présente une pluralité de nervures (2e) s'étendant transversalement à la direction longitudinale (L), **caractérisé en ce que** l'insert mélangeur (2) présente au moins deux supports longitudinaux (2f) s'étendant dans la direction longitudinale (L), sachant que chaque élément de base (2a, 2b, 2c, 2d) comprend au moins deux supports longitudinaux (2f), et sachant que les éléments de base (2a, 2b, 2c, 2d) et leurs supports longitudinaux (2f) sont disposés les uns par rapport aux autres de telle sorte que sont formés des supports longitudinaux (2f) s'étendant sur toute la longueur de l'insert mélangeur (2), sachant que des éléments de base (2a, 2b, 2c, 2d) disposés en juxtaposition sont fixement reliés entre eux au moins par l'intermédiaire des supports longitudinaux (2f).

2. Insert mélangeur (2) selon la revendication 1, sachant qu'il présente une section (2k) s'étendant perpendiculairement à la direction longitudinale (L) ayant un contour extérieur (21), et sachant que les supports longitudinaux (2f) s'étendent à l'intérieur de la section (2k) et à distance du contour extérieur (21).

3. Insert mélangeur (2) selon l'une des revendications précédentes, sachant que l'insert mélangeur (2) est réalisé sous la forme d'un élément monolithique.

4. Insert mélangeur (2) selon la revendication 3, **caractérisé en ce que** l'insert mélangeur (2) est constitué de métal.

5. Insert mélangeur (2) selon l'une des revendications 1 ou 2, sachant que les éléments de base (2a, 2b, 2c, 2d) présentent des points de contact mutuel (2g) au moins sur les supports longitudinaux (2f), points par l'intermédiaire desquels des éléments de base (2a, 2b, 2c, 2d) disposés en juxtaposition sont fixement reliés entre eux, en particulier par collage, brasage ou soudage.

6. Insert mélangeur (2) selon l'une des revendications précédentes, sachant que chaque élément de base (2a, 2b, 2c, 2d) présente la même forme.

7. Insert mélangeur (2) selon l'une des revendications précédentes, sachant que des éléments de base (2a, 2b, 2c, 2d) disposés en juxtaposition dans la direction longitudinale (L) sont disposés symétriquement les uns par rapport aux autres relativement à un plan s'étendant perpendiculairement à la direction longitudinale (L).

8. Insert mélangeur (2) selon l'une des revendications précédentes, sachant que des éléments de base (2a, 2b, 2c, 2d) disposés en juxtaposition dans la direction longitudinale (L) sont disposés relativement à la direction longitudinale (L) avec la même orientation ou en étant tournés les uns par rapport aux autres d'un multiple entier de 90 degrés.

9. Insert mélangeur (2) selon l'une des revendications précédentes, **caractérisé en ce qu'**il présente un contour extérieur circulaire (21).

10. Insert mélangeur (2) selon l'une des revendications précédentes, sachant que les éléments de base (2a, 2b, 2c, 2d) présentent des nervures de liaison (2n) s'étendant perpendiculairement à la direction longitudinale (L), par l'intermédiaire desquelles la pluralité de nervures (2e) sont fixement reliées entre elles.

11. Insert mélangeur (2) selon la revendication 10, sachant que les nervures de liaison (2n) présentent des points de contact mutuel (2g) par l'intermédiaire desquels des éléments de base (2a, 2b, 2c, 2d) disposés en juxtaposition sont fixement reliés entre eux.

12. Insert mélangeur (2) selon l'une des revendications précédentes, présentant quatre supports longitudinaux (2f) s'étendant dans la direction longitudinale (L).

13. Insert mélangeur (2) selon l'une des revendications précédentes, présentant au moins un élément de base (2a, 2b, 2c, 2d) pourvu d'une substance à action catalytique.

14. Mélangeur statique (1) comprenant un récipient (3) ainsi qu'un insert mélangeur (2) selon l'une des revendications précédentes, disposé à l'intérieur du récipient (3).

15. Mélangeur statique (1) selon la revendication 14, sachant que le récipient (3) présente sur son côté intérieur des appuis (3a) dépassant dans l'espace intérieur, contre lesquels s'applique l'insert mélangeur (2).

16. Mélangeur statique (1) selon la revendication 14 ou 15, sachant que le récipient (3) présente des appuis (3a) configurés et disposés de telle sorte que les supports longitudinaux (2f) viennent se placer sur les appuis (3a).

17. Mélangeur statique (1) selon l'une des revendications 15 à 16, sachant que les appuis (3a) sont disposés sur un élément mobile (3b) qui peut être fixement relié au récipient (3).

18. Procédé de fabrication d'un insert mélangeur (2) selon la revendication 3, **caractérisé en ce qu'**on produit des éléments de base (2a, 2b, 2c, 2d) à partir d'un matériau aisément fusible, **en ce qu'**on dispose une pluralité d'éléments de base (2a, 2b, 2c, 2d) en juxtaposition en contact mutuel dans une direction longitudinale (L), **en ce qu'**on enrobe les éléments de base (2a, 2b, 2c, 2d), **en ce qu'**on élimine ensuite les éléments de base (2a, 2b, 2c, 2d) par liquéfaction, de sorte que des cavités sont formées par les éléments de base (2a, 2b, 2c, 2d) qui ne sont plus présents, et **en ce qu'**on apporte aux cavités un matériau liquide qui se solidifie ensuite, de sorte qu'on obtient un insert mélangeur monolithique (2) qui présente pour l'essentiel la forme déterminée par les éléments de base (2a, 2b, 2c, 2d).

19. Procédé selon la revendication 18, **caractérisé en ce que** les éléments de base (2a, 2b, 2c, 2d) présentent tous la même forme et sont disposés en juxtaposition dans la direction longitudinale (L) de telle sorte que des éléments de base (2a, 2b, 2c, 2d) voisins dans la direction longitudinale (L) présentent des orientations différentes.
